# EUROPEAN PATENT APPLICATION

(11) **EP 1 526 292 A1**
(43) Date of publication of application: **27.04.2005**
(21) Application number: 03023991.7
(22) Date of filing: 22.10.2003
(51) Int. Cl.: F16B 15/08

(54) **Strip of fasteners, fastening system and related method**

(71) Applicant: Mangone, Peter G. Jr., Golden, CO, 80401 (US)
(72) Inventor: Mangone, Peter G. Jr., Golden, CO, 80401 (US)
(74) Representative: Ebner von Eschenbach, Jennifer

(57) **Abstract**

Disclosed is a strip of fasteners (100) and related methods including at least a first fastener (112) and a second fastener (113) connected to the first fastener (112). Also disclosed is a system including the strip of fasteners (100) and an installation tool (30) capable of inserting each of the fasteners in the strip into a substrate (10).

## Description

Fastening devices, such as clips and staples, are commonly used to attach objects (e.g., cylindrical objects) to generally planar surfaces such as substrates. Examples of such objects include conduits such as electrical conductors (e.g., cables and wires) and also tubing and pipes designed to carry fluids, such as water. Such conduits may, for example, be generally circular in cross section (in the case, for example, of a typical water pipe or electrical conduit) or may, alternatively, have a different cross-sectional shape (e.g., elliptical or rectangular). Thus, such fastening devices may, for example, be used to facilitate the installation of electrical conduits or fluid carrying pipes during building construction and/or renovation.

A typical fastening device generally includes a pair of leg portions joined by a crown portion. To secure an object to a substrate, the fastening device is generally arranged such that the legs straddle the object.

In one type of fastening device, one or both of the legs are then driven directly into the substrate (e.g., by hammering or through the use of an automated or semi-automated installation tool) such that the object is secured between the substrate and the crown portion of the fastening device. This type of fastening device is typically used in conjunction with substrates made of relatively soft material, e.g, Styrofoam®. Examples of this type of fastening device are generally disclosed in the following U.S. patents: 1,736,807 of Thomas; 5,223,675 of Taft and 5,718,548 of Cotellessa, all of which are hereby incorporated by reference for all that is disclosed therein.

In another type of fastening device, one or more separate substrate penetrating members (e.g., screws or nails) are engaged with the leg members and then driven into the substrate. This type of fastening device is typically used in conjunction with substrates made of relatively hard material, e.g, wood. Examples of this type of fastening device are generally disclosed in the following U.S. patents: 4,801,064 of Mangone; 5,350,267 of Mangone and 6,021,982 of Mangone, all of which are hereby incorporated by reference for all that is disclosed therein.

Disclosed herein is a method in which a plurality of fasteners may be provided. The plurality of fasteners may include at least a first fastener and a second fastener connected to the first fastener. The method may further include: causing at least a portion of the first fastener to be parallel to at least a portion of the second fastener; inserting the plurality of fasteners into engagement with an installation tool while the portion of the first fastener is parallel, to the portion of the second fastener; and thereafter causing the portion of the first fastener to be non-parallel to the portion of the second fastener while the first fastener remains connected to the second fastener and while the plurality of fasteners is in engagement with the installation tool.

Also disclosed herein is a system that may include a plurality of fasteners and an installation tool. The plurality of fasteners may include at least a first fastener and a second fastener. The system may also include at least first, second and third operating conditions. In the first operating condition; the plurality of fasteners may be operatively engaged with the installation tool, the second fastener may be connected to the first fastener, and at least a portion of the first fastener may be parallel to at least a portion of the second fastener. In the second operating condition; the plurality of fasteners may be operatively engaged with the installation tool, the second fastener may be connected to the first fastener, and the portion of the first fastener may be non-parallel to the portion of the second fastener. In the third operating condition, the first fastener may be separated from the second fastener.

Also disclosed herein is a plurality of fasteners that may include at least a first fastener and a second fastener. The first fastener may include at least a pair of leg members and at least one crown portion joining the pair of leg members. The second fastener may include at least a pair of leg members and at least one crown portion joining the pair of leg members. The plurality of fasteners may further include at least one connecting portion connecting the first fastener and the second fastener. The first fastener, the second fastener and the connecting portion may be integrally formed with one another. Further, the first fastener and the second fastener may be capable of assuming at least first and second operating conditions. In the first operating condition, the first fastener leg members may be parallel to the second fastener leg members. In the second operating condition, the connecting portion may be elastically deformed and the first fastener leg members may form an angle of at least about 4 degrees with respect to the second fastener leg members.
Fig. 1 is a front elevation view of a prior art installation tool located in conjunction with a conduit.
Fig. 2 is a cross-sectional view taken along the line 2-2 in Fig. 1.
Fig. 3 is a top perspective view of a strip of fasteners.
Fig. 4 is a top plan view of the strip of Fig. 3
Fig. 5 is a front elevation view of one of the fasteners separated from the strip of Fig. 3.
Fig, 6 is a detail view of a portion of the fastener of Fig. 5 identified by the reference numeral 164 in Fig. Fig. 5.
Fig. 7 is a front elevation view of a system including the strip of Fig. 3 and an installation tool.
Fig. 8 is a side elevation view of the strip of Fig. 3 in which some of the fasteners in the strip are in a non-parallel relationship.

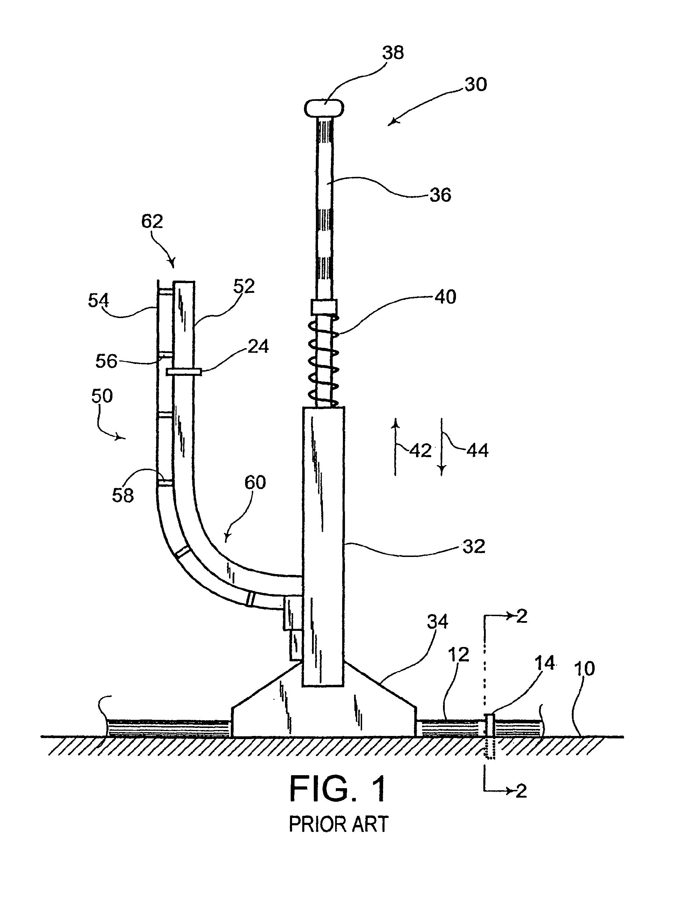

Fig. 1 illustrates a prior art installation tool 30. Installation tool 30 may, for example, be of the type useable to install generally U-shaped fasteners, such as the fastener 14 in order to facilitate attachment of an object, e.g., the conduit 12, to a substrate 10. The substrate 10 may, for example, he a relatively soft material, such as styrofoam®, which is commonly used as a substrate during the installation of in-floor radiant heating system.

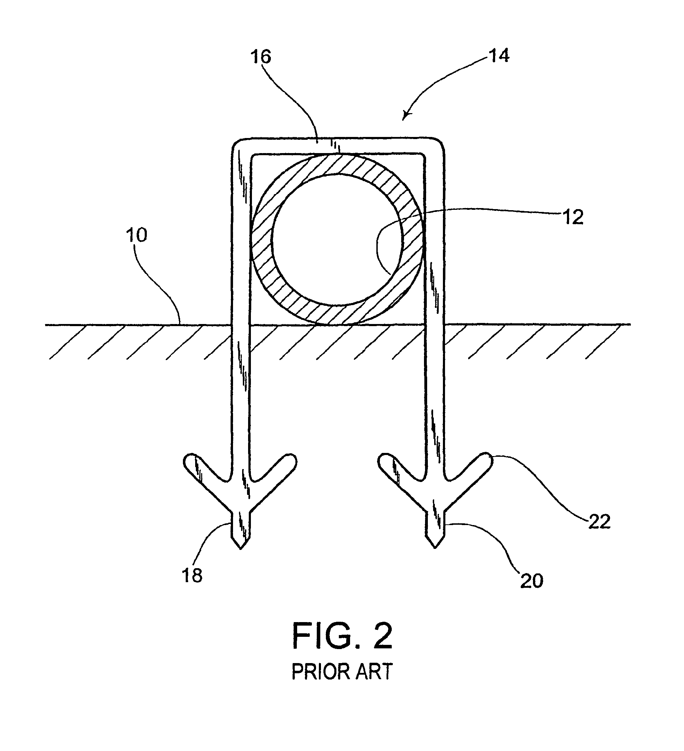

Fig. 2 illustrates, in further detail, the prior art attachment of the conduit 12 to the substrate 10. With reference to Fig. 2, the fastener 14 may generally include a pair of leg members 18, 20 connected by a crown portion 16. As can be appreciated from Fig. 2, the legs 18 and 20 of the fastener 14 may be embedded within the substrate 10 such that the conduit 12 is firmly held between substrate 10 and the crown portion 16 of the fastener 14. The leg members 18, 20 of the fastener 14 may include barbs, such as the barb 22, to further secure the fastener 14 within the substrate 10.

Referring again to Fig. 1, installation tool 30 may include a main body portion 32. Main body portion 32 may include a foot portion 34 at the bottom thereof. Foot portion 34 is adapted to contact the substrate 10 during use and may include a cutout portion (not shown) sized and shaped to allow the foot portion 34 to fit over the conduit 12. A plunger 36 may be slidably received within the main body portion 32 and may include a handle 38 attached thereto, the handle 38 being of the type adapted to be grasped by a human hand. A spring 40 may be provided as shown in order to urge the plunger 36 in the direction indicated by the arrow 42.

With further reference to Fig. 1, a magazine 50 may be attached to the main body portion 32 of the installation tool 30, as shown. Magazine 50 may include a channel member 52 which may, for example, have a rectangular cross-section. A bar member 54 may be attached to the channel member 52 via a plurality of posts, such as the posts 56, 58. Magazine 50 may further include a curved portion 60 in which both the channel member 52 and the bar member 54 may have curved profiles as shown.

In operation, a plurality of fasteners, such as the individual fastener 14 previously described, are first installed into the magazine 50 of the installation tool 30 (for clarity of illustration purposes, only one such fastener 24 is shown installed in Fig. 1). More specifically, a fastener, e.g., the fastener 24, is first inserted over the open end 62 of the channel member 52. After being initially inserted in this manner, gravity causes the fastener 24 to slide down the channel member 52 and travel around the curved portion 60 until it enters the main body 32. This process is then repeated with additional fasteners until a plurality of fasteners are retained within the magazine 50.

After the magazine 50 has been loaded with a plurality of fasteners, as described above, the installation tool 30 may be positioned over the conduit 12 such that the leg members 18, 20 of the fastener 14 are located on opposite sides of the conduit 12, as illustrated in Figs. 1 and 2. A human operator may then push down on the handle 36 in the direction 44 causing a driver (not shown) which is attached to the lower end of the plunger 36 to contact the fastener that has advanced into the body portion 32. This contact, in turn, causes the fastener to be driven downwardly into the substrate 10 surrounding the conduit, thus retaining the conduit in place relative to the substrate in a manner as generally shown in Fig, 2. After the fastener has been installed, the plunger 36 is allowed to move in the direction 42, urged by the spring 40, until the plunger returns to the starting position shown in Fig. 1. As the driver moves out of the way, the next fastener in the magazine 50 will move into the body portion 32, urged in such direction by the weight of the remaining fasteners stored above it in the magazine.

After the next fastener in the magazine has moved into the body portion 32, as described above, the installation tool 30 may then be moved to the next. desired location along the conduit 12 (or along a different conduit if desired) and the process described above repeated in order to install the next fastener.

As can be appreciated from the above, the installation tool 30 is able to install a plurality of fasteners into the substrate 10. Heretofore, however, it has been necessary, when loading the magazine 50, to insert each fastener individually. This represents a time consuming and, thus, labor intensive task.

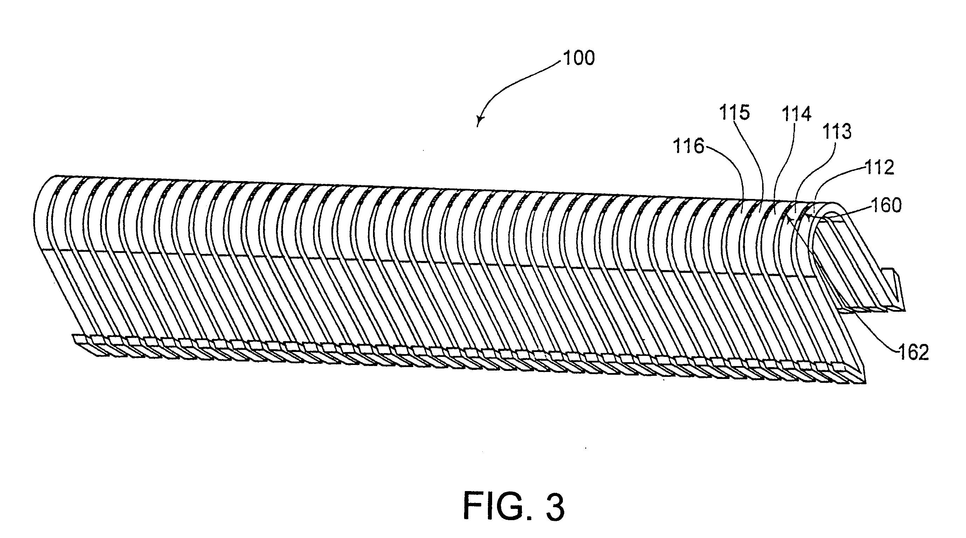

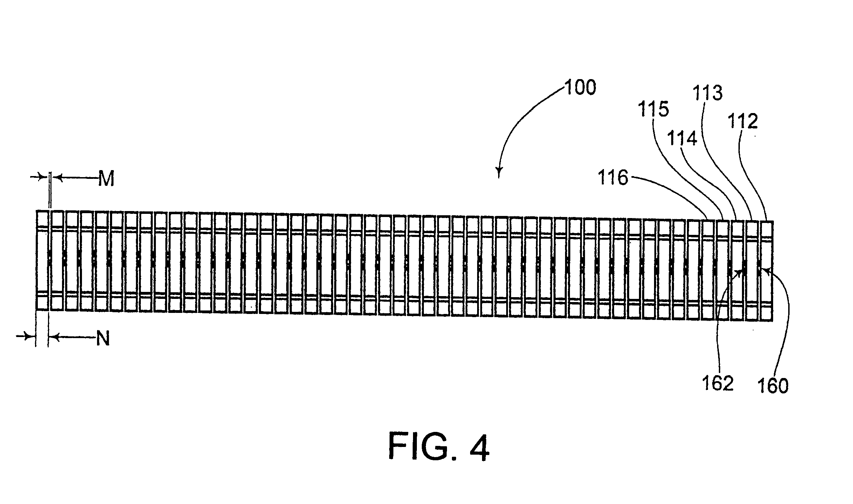

Figs. 3 and 4 illustrate a strip 100 of fasteners useable with a fastener installation tool, e.g., the fastener installation tool 30 previously described. The strip 100 may include a plurality of fasteners such as the individual fasteners 112, 113, 114, 115, 116. The strip may, for example, include fifty such individual fasteners, although strips having greater or fewer numbers of individual fasteners may alternatively be provided. The strip 100 may, for example, be formed from a plastic material such as HDPE.

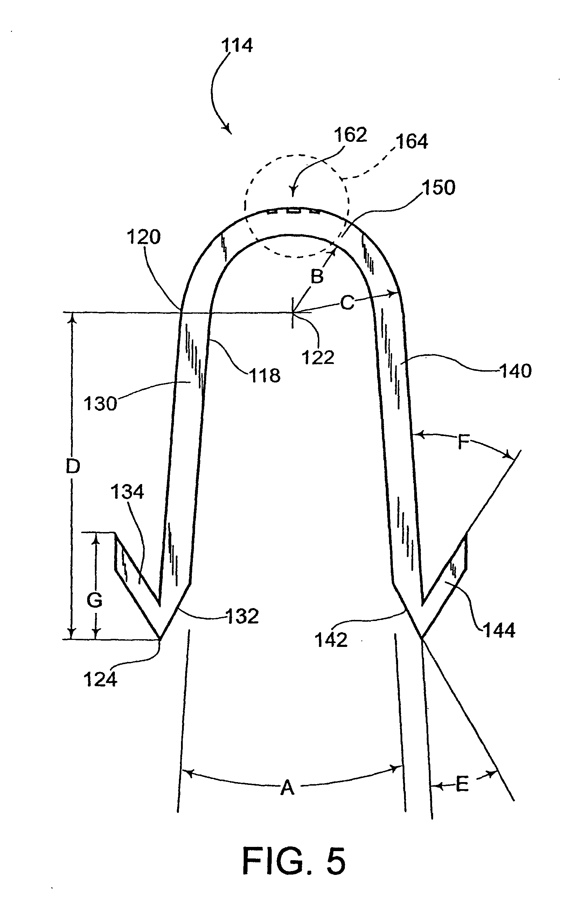

The fastener 114 is illustrated individually in Fig. 5, it being understood that the remaining fasteners within the strip 100 may be substantially identical to the fastener 114. Referring now to Fig. 5, the fastener 114 may include a pair of leg members 130 and 140 that may be connected by a crown portion 150. The fastener 114 may further generally include an inner surface 118 and an oppositely disposed outer surface 120, as shown. The inner surface 118 of the leg members 130 and 140 may form an included angle "A". The outer surface 120 of the leg members 130, 140 may form the same included angle "A". The angle "A" may, for example, be about 6 degrees.

The inner surface 118 of the crown portion 150 may, for example, have a radius "B" about a point 122. The outer surface 120 of the crown portion 150 may, for example, have a radius "C" about the point 122. The point 122 may be located a distance "D" above the lowermost (as viewed in Fig. 5) point 124 on the fastener 114. The radius "B" may, for example, be about 0.375 inch while the radius "C" may, for example, be about 0.475 inch. The distance "D" may, for example, be about 1.525 inches.

An angled surface 132 may be formed at the lower end of the leg member 130. A barb portion 134 may extend upwardly (as viewed in Fig. 5) from the lower end of the leg member 130, as shown. In a similar manner, an angled surface 142 may be formed at the lower end of the leg member 140 and a barb portion 144 may extend upwardly from the lower end of the leg member 140. The angled surfaces 132, 142 may each extend at an angle "E" with respect to the outer surface 120 of the leg portions 130, 140, respectively. The barb portions 134, 144 may each extend at an angle "F" with respect to the outer surface 120 of the leg portions 130, 140, respectively. The barb portions 134, 144 may each extend for a distance "G" above the lowermost (as viewed in Fig. 5) point 124. The angles "E" and "F" may, for example, each be about 30 degrees. The distance "G" may, for example, be about 0.476 inch.

Referring again to Figs. 3 and 4, the individual fasteners e.g., 112, 113, 114, 115, 116 may be connected to one another within the strip 100. Specifically, the fastener 112 may be connected to the fastener 113 via a connector 160, the fastener 113 may be connected to the fastener 114 via a connector 162 and so on. The connector 162 will now be described in further detail, it being understood that the remaining connectors in the strip 100 may be configured in a substantially identical manner.

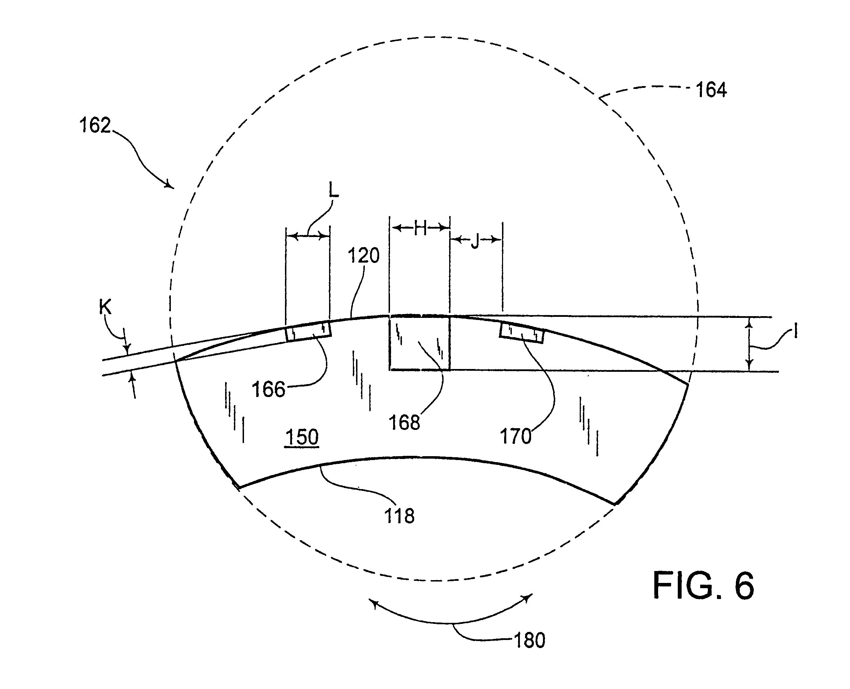

Referring to Fig. 5, it can be seen that the connector 162 may be formed adjacent the upper (as viewed in Fig. 5) periphery of the crown portion 150 of the fastener 162. This area 164 of the fastener 114 is illustrated in greater detail in Fig. 6. Referring now to Fig. 6, it can be seen that the connector 162 may include three separate connecting portions 166, 168 and 170. The connecting portion 168 may be located at the uppermost (as viewed in Figs. 5 and 6) point of the fastener 114 along curved outer surface 120, as shown. Connecting portion 168 may, for example, have a square cross-section as shown in Fig. 6. The width "H" and the height "I" of this square may, for example, each be about 0.020 inch. The connecting portions 166, 170 may be located on either side of the connecting portion 168, as shown. Connecting portions 166 and 168 may, for example, each have rectangular cross-sections as shown in Fig. 6. The connecting portion 170 may be located a distance "J" from the connecting portion 168, as shown. The distance "J" may, for example, be about 0.055 inch. The connecting portion 166 may be located the same distance "J" on the opposite side of the connecting portion 168, as shown. The connecting portions 166, 170 may each have a height "K" and a width "L". The height "K" may, for example, be about 0.005 inch. The height "L" may, for example, be about 0.020 inch.

With reference to Fig. 4, each of the connecting portions within the strip 100 (including the connecting portions 166, 168 and 170 discussed above) may have a length "M". As can be appreciated, this length "M" also defines the spacing between the individual fasteners within the strip 100. The length "M" may, for example, be about 0.062 inch. With further reference to Fig. 4, each of the fastening members within the strip 100 may have a width "N" which may, for example, be about 0.188 inch.

As can be appreciated, the strip 100 described above represents a unitary structure comprising a plurality of individual fasteners. As such, the strip allows a plurality of fasteners to be installed into the magazine of an installation tool in one action and, thus, eliminates the necessity of manually installing individual fasteners as previously discussed. The strip 100 may also be simpler and less costly to manufacture, relative to the manufacture of individual fasteners. Specifically, for example, the strip 100 allows a plurality of individual fasteners to be molded in one step and also reduces the amount of subsequent handling required since the individual fasteners within the strip 100 may be conveyed and handled as a single unit rather than individually.

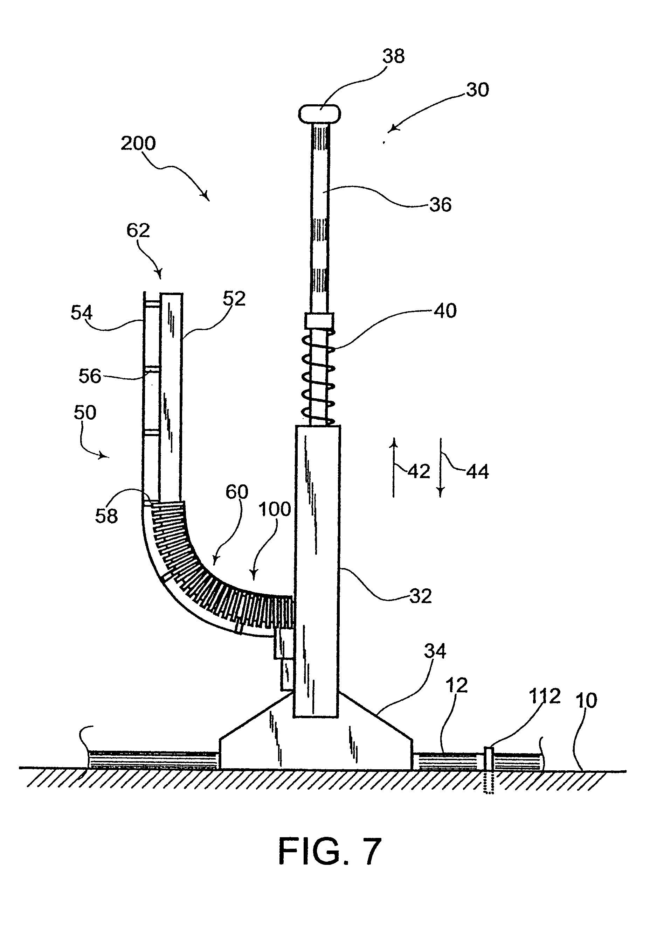

Fig. 7 illustrates a system 200 that includes a strip of fasteners, e.g., the strip 100 previously described, and an installation tool, e.g., the installation tool 30 previously described. As illustrated in Fig. 7, the strip 100 has been installed into the magazine 50 of the installation tool 30. To accomplish this installation, the strip 100 may first be inserted over the open end 62 of the channel member 52. After being initially inserted in this manner, the strip then slides down the channel member 52, under the force of gravity, and travels around the curved portion 60 until the leading fastener in the strip enters the main body 32. Accordingly, the strip 100 allows a plurality of fasteners (e.g., fifty) to be loaded into the magazine 50 in a single step.

After the strip 100 has been loaded into the magazine, as described above, the installation tool 30 may be operated in substantially the same manner as previously described to install individual fasteners. Specifically, for example, the installation tool 30 may be positioned over the conduit 12 as illustrated in Fig. 7. A human operator may then push down on the handle 38 in the direction 44 causing a driver (not shown) which is attached to the lower end of the plunger 36 to contact the leading fastener in the strip 100 that has advanced into the body portion 32. This contact, in turn, severs the connector between the leading fastener and the adjacent fastener, e.g., the connector 162, Fig. 5. More specifically, severing the connector may, for example, entail severing each of the individual connecting portions making up the connector, e.g., the connecting portions 166, 168, 170 making up the connector 162, Fig. 6.

The aforementioned contact between the driver and the leading fastener in the strip 100 also causes the fastener to be driven downwardly into the substrate 10 surrounding the conduit, thus retaining the conduit in place relative to the substrate in a manner similar to that previously described. Fig. 7 schematically illustrates a fastener 112 installed in the substrate 10. The barbs, e.g., the barb portions 134, 144, Fig. 5, help resist disengagement of the fastener from the substrate 10 once installed.

After a fastener has been installed, as described above, the plunger 36 is allowed to move in the direction 42, urged by the spring 40, until the plunger returns to the starting position shown in Fig. 7. As the driver moves out of the way, the next fastener in the strip 100 will move into the body portion 32 due to the weight of the remaining fasteners in the strip 100 above it in the magazine.

Alternatively, the installation tool 30 may be provided with a mechanism, not shown, to apply downward (as viewed in Fig. 7) force to the strip 100 in order to enhance the movement of the next fastener, into the body portion 32. Such mechanism may, for example, take the form of a weight placed above the strip 100 and engaged with the magazine channel member 52. Alternatively, this mechanism may, for example, take the form of a spring mounted within the magazine 50 in such a manner as to apply a downward force to the strip 100.

After a fastener has been installed, in a manner as described above, the installation tool 30 may then be moved to the next desired location along the conduit 12 (or along a different conduit if desired) and the process described above repeated in order to install the next fastener in the strip 100.

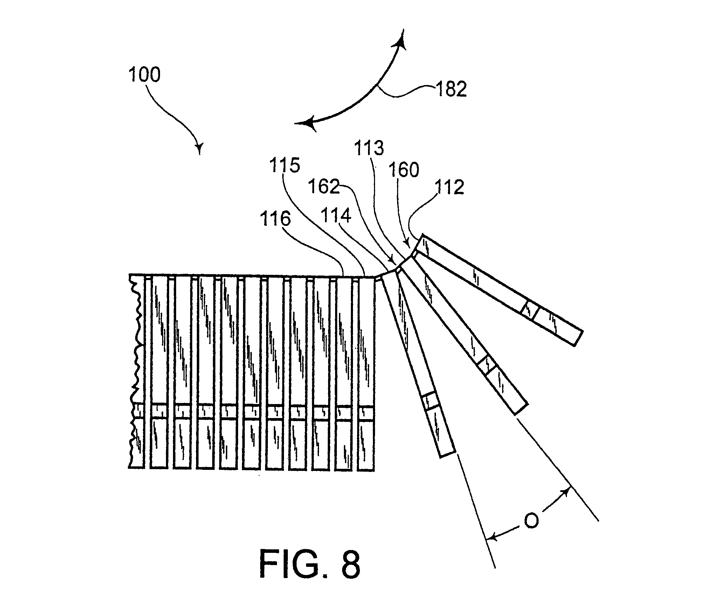

As previously noted, the strip 100 is a unitary structure including a plurality of fasteners, thus allowing a plurality of fasteners to be loaded into an installation tool in a single step. The construction of the strip 100, as previously described, allows the strip, nevertheless, to travel around the curved portion 60 of the magazine 50, More specifically, with reference to Fig. 8, it can be appreciated that the connectors previously described (e.g., the connectors 160, 162) allow the strip 100 to deform as shown. Specifically, it can be seen that, while the fasteners 115 and 116 remain substantially parallel to one another, the fasteners 112, 113 and 114 have assumed a non-parallel relationship with respect to each other and with respect to the fastener 115. With further reference to Fig. 7, it can be seen that the fastener 113 may form an angle "O" with respect to the fastener 114. The magnitude of this angle "O" is dependent, for example, on degree of curvature of the curved portion 60 of the installation tool magazine 50, Fig, 7, and the particular size and configuration of the fasteners within the strip 100. It is noted that, although the curved portion 60 has been illustrated for exemplary purposes as an arc of a circle, the curved portion could, alternatively assume a different curved or arcuate profile, e.g., an elliptical or parabolic profile.

In order to traverse magazines of differing configurations, the fasteners within the strip 100 may be capable, for example, of assuming an angle "O" of at least about 4 degrees and, more preferably, at least about 9 degrees. Further, the fasteners may be capable of achieving an angle "O" of about 15 degrees. This angle is enabled by elastic deformation of the connector 162. Accordingly, the connector 162 allows the fastener 113 to assume a non-parallel relationship with respect to the fastener 114 while maintaining the fasteners 113, 114 in a connected relationship. This ability to assume a non-parallel relationship, in turn, allows the strip 100 to navigate non-linear features, such as the curved portion 60 of the fastening device magazine 50 previously described.

As can be appreciated from the above, the individual fasteners within the strip 100 are able to move from a parallel orientation to an orientation in which each fastener forms an angle "O", Fig. 8, with respect to its adjacent fastener and then resiliently move back to the original parallel orientation. The ability of the strip to "flex" in this manner allows the strip to negotiate non-linear portions of an installation tool magazine, such as the curved portion 60 illustrated in Fig. 7. More specifically, with reference to Fig. 7, when the strip 100 is first inserted into the open end 62 of the channel member 52, the individual fasteners within the strip 100 may be substantially parallel to one another as illustrated, for example, with respect, to the fasteners 115, 116 in Fig. 8. As each fastener in the strip 100 enters into the curved portion 60, however, it will assume an angled orientation with respect to the adjacent fastener as illustrated, for example, with respect to the fasteners 113, 114 in Fig, 8. As each fastener in the strip 100 leaves the curved portion 60 (and approaches the main body portion 32), it may resiliently return to its original parallel orientation with respect to the adjacent fastener.

Referring to Fig. 7, the upper portion of the magazine 50 is illustrated as being substantially vertical, i.e., substantially parallel to the main body portion 32 and substantially perpendicular to the substrate 10. It is noted, however, that the upper portion of the magazine 50 may alternatively be configured such that it is not vertical. Such a non-vertical orientation may be desirable, for example, to improve the tendency of the strip 100 to remain engaged with the magazine 50 since, in this non-vertical orientation, gravity will tend to hold the strip against 'the channel member 52. The non-vertical orientation described above may also serve to reduce resistance as the strip 100 travels around the magazine curved portion 60, in a manner as described above. The upper portion of the magazine 50 may, for example, be configured such that it forms an angle of about 30 degrees with respect to the main body portion 32 and an angle of about 60 degrees with respect to the substrate.

It is noted that, if desired, the installation tool magazine 50, Fig. 7, may be provided with a mechanism, not shown, to retain the strip 100 against the channel member 52 during use. Alternatively, if desired, the strip 100 may be provided with features, e.g., molded features, to engage the channel 52 and thereby facilitate retention.

As previously described, each of the connectors connecting the individual fasteners of the strip 100 may include three separate and distinct connecting portions, e.g., the connecting portions 166, 168, 170, Fig. 6. With reference to Fig 6, the center connecting portion 168, due to its relatively larger cross-sectional area, may provide the majority of the strength required to maintain the fasteners in an attached configuration, e.g., in the form of the strip 100. The remaining connecting portions 166, 170 may be provided, primarily, to prevent movement of a fastener in the strip 100 in the directions indicated by the arrow 180, Fig 6, relative to an adjacent fastener. The connecting portions 16 6, 17 0, thus, may be provided to add stability to the strip of fasteners 100. Accordingly, although the strip 100 may flex in directions indicated by the arrow 182, Fig. 8, the connecting portions 166, 170 serve to reduce undesirable flexing in the directions indicated by the arrow 180, Fig. 6.

It is noted, however, that one or both of the connecting portions 166, 170 may be omitted in cases where stability is not a problem, e.g., where flexing in the directions indicated by the arrow 180, Fig. 6 is not a problem. In the case where both of the connecting portions 166, 170 are omitted, the connecting portion 168 would provide the sole connection between fasteners.

The strip 100 may, for example, be formed in a conventional injection molding process. Alternatively, the strip 100 may be formed using any other process such as an extrusion process. In the case of an extrusion process, material may, for example, be extruded having a cross-sectional shape as generally shown in Fig. 5. A cutting device, e.g., a conventional slitting saw, may then be used to cut the extruded strip into separate fasteners while leaving an uncut connector between each two fasteners. In this case, the outer connecting portions 166, 170, Fig. 6, may be omitted, in a manner as previously described. Further, the center connecting portion 168 may be reconfigured in any desired manner in order to facilitate formation by the slitting saw.

It is noted that, although the system 200, Fig. 7, has been described in conjunction with a conventional manually activated installation tool, the installation tool, could alternatively take the form of any other type of installation tool, e.g., a pneumatically or hydraulically actuated installation tool.

As previously described, the strip 100 is able to travel around the curved portion of an installation tool magazine, e.g., the curved portion 60, Fig. 7. As can be appreciated, this ability is directly linked to the flexibility of the inter fastener connectors, e.g., the connector 162, Figs. 5 and 6. The flexibility of the connectors, in turn, is a function of the total cross-sectional area of the connecting portions (e.g., the connecting portions 166, 168, 170, Fig. 6), the length "M", Fig. 4, of the connecting portions and the nature of the material used to form the strip of fasteners 100. It is to be understood that the dimensions previously described with respect to the connecting portions 166, 168, 170 have been provided for exemplary purposes only and these dimensions (as well as the number of connecting portions) may readily be adjusted as needed. If, for example, a stronger and/or stiffer material were used to form the strip of fasteners 100, then it might be desirable to reduce the cross-sectional areas of the connecting portions in order to achieve the flexibility necessary to enable the strip 100 to negotiate the curved portion of a magazine. Of course, the converse would also be true in the case where a relatively weaker and/or more flexible material were used to form the strip 100.

It is further noted that, although the strip 100 has been described in conjunction with an installation tool having a curved magazine portion, the strip 100 could, of course, readily be used in an installation tool that does not have such a curved magazine portion, e.g., an installation tool having a substantially linear magazine.

It is further noted that the fasteners in the strip 100 have been described and illustrated herein as the type in which the legs of the fastener are driven directly into the substrate for exemplary descriptive purposes only. The fasteners forming the strip 100 could, alternatively, be any type of fastener, for example; the type of fastener in which one or more separate substrate penetrating members (e.g., screws or nails) are engaged with the leg members and then driven into the substrate, as previously described.

## Claims

1. A method comprising:
'providing a plurality of fasteners comprising at least a first fastener and a second fastener connected to said first fastener;
causing at least a portion of said first fastener to be parallel to at least a portion of said second fastener;
inserting said plurality of fasteners into engagement with an installation tool while said at least a portion of said first fastener is parallel to said at least a portion of said second fastener;
causing said at least a portion of said first fastener to be non-parallel to said at least a portion of said second fastener while said first fastener remains connected to said second fastener and while said plurality of fasteners is in engagement with said installation tool.

2. The method of claim 1 wherein said causing said at least a portion of said first fastener to be non-parallel to said at least a portion of said second fastener comprises moving said plurality of fasteners about an arcuate portion of said installation tool from a first position to a second position in which said first fastener may be contacted by a moveable portion of said installation tool.

3. The method of claim 2 and further comprising:
installing said first fastener into a substrate by separating said first fastener from said second fastener by contacting said first fastener with said moveable portion of said installation tool.

4. The method of claim 1 wherein said first fastener is integrally formed with said second fastener.

5. The method of claim 3 wherein each of said plurality of fasteners comprises:
- at least a pair of leg members; and
- at least one crown portion joining said at least a pair of leg members.

6. The method of claim 5 wherein said causing at least a portion of said first fastener to be parallel to at least a portion of said second fastener comprises causing said leg members of said first fastener to be parallel to said leg members of said second fastener.

7. The method of claim 6 wherein said causing said at least a portion of said first fastener to be non-parallel to said at least a portion of said second fastener comprises causing said leg members of said first fastener to be non-parallel to said leg members of said second fastener.

8. The method of claim 5 wherein said installing said first fastener into a substrate comprises inserting at least a portion of said leg members of said first fastener into said substrate.

9. The method of claim 5 wherein said providing a plurality of fasteners comprising at least a first fastener and a second fastener connected to said first fastener comprises providing said plurality of fasteners comprising at least one connecting portion connecting said at least one crown portion of said first fastener and said at least one crown portion of said second fastener.

10. The method of claim 9 wherein said separating said first fastener from said second fastener comprises severing said at least one connecting portion.

11. The method of claim 9 wherein said at least one connecting portion comprises at least two distinct connecting portions.

12. A system comprising:
a plurality of fasteners comprising at least a first fastener and a second fastener;
an installation tool;
wherein said system comprises at least first, second and third operating conditions;
wherein, in said first operating condition:
- said plurality of fasteners is operatively engaged with said installation tool;
- said second fastener is connected to said first fastener; and
- at least a portion of said first fastener is parallel to at least a portion of said second fastener;
wherein, in said second operating condition:
- said plurality of fasteners is operatively engaged with said installation tool;
- said second fastener is connected to said first fastener; and
- said at least a portion of said first fastener is non-parallel to said at least a portion of said second fastener;
wherein, in said third operating condition:
- said first fastener is separated from said second fastener.

13. The system of claim 12 and further wherein:
said installation tool includes an arcuate portion; and
in said second condition, said plurality of fasteners are in contact with said arcuate portion.

14. The system of claim 12 and further wherein said first fastener is integrally formed with said second fastener.

15. The system of claim 12 wherein each of said plurality of fasteners comprises:
- at least a pair of leg members; and
- at least one crown portion joining said at least a pair of leg members.

16. The system of claim 15 wherein, in said first operating condition, said leg members of said first fastener are parallel to said leg members of said second fastener.

17. The system of claim 15 wherein, in said second operating condition, said leg members of said first fastener are non-parallel to said leg members of said second fastener.

18. The system of claim 15 wherein, in said third condition, at least a portion of said leg members of said first fastener are inserted into a substrate.

19. The system of claim 15 wherein, in said first and second operating conditions, at least one connecting portion connects said at least one crown portion of said first fastener and said at least one crown portion of said second fastener.

20. The system of claim 19 wherein, in said third condition, said at least one connecting portion is severed.

21. The system of claim 19 wherein said at least one connecting portion comprises at least two distinct connecting portions.

22. The system of claim 12 wherein, in said third operating condition, said at least a portion of said first fastener is parallel to said at least a portion of said second fastener.

23. A plurality of fasteners comprising:
at least a first fastener and a second fastener;
wherein said first fastener comprises at least a pair of first fastener leg members and at least one first fastener crown portion joining said at least a pair of first fastener leg members;
wherein said second fastener comprises at least a pair of second fastener leg members and at least one second fastener crown portion joining said at least a pair of second fastener leg members;
at least one connecting portion connecting said first fastener and said second fastener;
wherein, said first fastener, said second fastener and said at least one connecting portion are integrally formed with one another;
wherein said first fastener and said second fastener are capable of assuming at least; first and second conditions;
wherein, in said first condition, said first fastener leg members are parallel to said second fastener leg members;
wherein, in said second condition, said at least one connecting portion is resiliently deformed and said first fastener leg members form an angle of at least about 4 degrees with respect to said second fastener leg members.

24. The apparatus of claim 23, wherein said at least one connecting portion comprises at least two distinct connecting portions.

25. The apparatus of claim 23 wherein said at least one connecting portion connects said first fastener crown portion to said second fastener crown portion.

26. The apparatus of claim 23 wherein said first fastener, said second fastener and said connecting portion are formed from a plastic material.
